# EUROPEAN PATENT APPLICATION

(11) **EP 4 626 072 A1**
(43) Date of publication of application: **01.10.2025**
(21) Application number: 23894326.0
(22) Date of filing: 23.10.2023
(51) Int. Cl.: H04W 28/16, H04W 16/26, H04W 72/0446, H04W 72/0453, H04W 72/52, H04W 88/12

(54) **PROCESSING DEVICE, CONTROL DEVICE, CONTROL METHOD AND PROGRAM FOR EFFICIENT COMMUNICATIONS**

(30) Priority: 24.11.2022 JP 2022187554
(71) Applicant: KDDI Research, Inc., Fujimino-shi, Saitama 356-8502 (JP)
(72) Inventor: HIRAYAMA, Haruhisa, Fujimino-shi, Saitama 356-8502 (JP); SHINBO, Hiroyuki, Fujimino-shi, Saitama 356-8502 (JP)
(74) Representative: Mathys & Squire
(86) International application number: PCT/JP2023/038161
(87) International publication number: WO 2024/111314

(57) **Abstract**

A processing apparatus, which functions as a distributed unit (DU) in a radio communication system in which one radio unit (RU) is shared by a plurality of DUs, notifies, to a control device, first information relating to a radio quality and an amount of traffic to be transmitted or received by a terminal device to which the processing apparatus provides a communication service via the one RU, receives, from the control device, second information indicating assignment, to the processing apparatus, of radio resources relating to at least one of frequency and time for the one RU, and at least partially assigns the radio resources indicated by the second information to the terminal device and communicates with the terminal device via the one RU.

## Description

### TECHNICAL FIELD

The present invention relates to a technology for improving the efficiency of radio communication.

### BACKGROUND ART

There are calls for a radio access network (RAN) configuration adapted to the characteristics of various services to be efficiently provided in radio communication systems. Networks that use a controller for determining the allocation of radio resources to services and functional units corresponding to respective services and having a scheduler function for assigning radio resources allocated by the controller to terminal devices are being considered for this purpose. Such a controller corresponds to a RAN intelligent controller (RIC) in an open radio access network (O-RAN), and such a scheduler corresponds to a distributed unit (DU). The DU is connected to a radio unit (RU) and provides communication services managed by the DU to terminal devices by assigning radio resources for the communication services to the terminal devices via the RU. Note that the RU is a functional unit that, for example, executes baseband processing, radio frequency processing, and the like, and serves as an interface that uses radio resources to communicate with terminal devices.

### CITATION LIST

### NON-PATENT LITERATURE

NPL 1: Cloud Architecture and Deployment Scenarios for O-RAN Virtualized RAN, 2022

### SUMMARY OF INVENTION

### TECHNICAL PROBLEM

In a conventional network configuration, it is assumed that one RU is used by one DU. Further developing such a network configuration into a configuration in which one RU is shared by a plurality of DUs is being considered (NPL 1). In such a configuration, for example, the DUs do not know the radio resources used by other DUs, and thus multiple DUs can try to use the same radio resources among the radio resources available to the one RU. Under such conditions, communication efficiency can deteriorate due to at least one of the DUs not being able to use the radio resources.

### SOLUTION TO PROBLEM

The present invention provides a technology that enables efficient communication control in an environment in which a plurality of schedulers share a plurality of radio units.

A processing apparatus according to one aspect of the present invention is a processing apparatus functioning as a distributed unit (DU) in a radio communication system in which one radio unit (RU) is shared by a plurality of DUs, the processing apparatus comprising: notification means for notifying, to a control device, first information relating to a radio quality and an amount of traffic to be transmitted or received by a terminal device to which the processing apparatus provides a communication service via the one RU; receiving means for receiving, from the control device, second information indicating assignment, to the processing apparatus, of radio resources relating to at least one of frequency and time for the one RU; and communication means for at least partially assigning the radio resources indicated by the second information to the terminal device and communicating with the terminal device via the one RU.

A control device according to one aspect of the present invention is a control device that assigns radio resources to a plurality of processing units each functioning as a distributed unit (DU) in a radio communication system in which one radio unit (RU) is shared by the processing units, the control device comprising: receiving means for receiving, from each of the processing apparatuses, a radio quality and an amount of traffic to be transmitted or received by a terminal device to which the processing apparatus provides a communication service via the one RU; determination means for individually determining, for each of the processing apparatuses, radio resources relating to at least one of frequency and time for the one RU; and notification means for notifying second information indicating the determined radio resources to each of the processing apparatuses.

### ADVANTAGEOUS EFFECTS OF INVENTION

According to the present invention, efficient communication control in an environment in which a plurality of schedulers share a plurality of radio units becomes possible.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing an example configuration of a radio communication system.
FIG. 2 is a diagram showing an example hardware configuration of an apparatus.
FIG. 3 is a diagram showing an example functional configuration of a DU.
FIG. 4 is a diagram showing an example functional configuration of an RIC.
FIG. 5 is a diagram showing an example of the flow of processing executed in the system.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### (System Configuration)

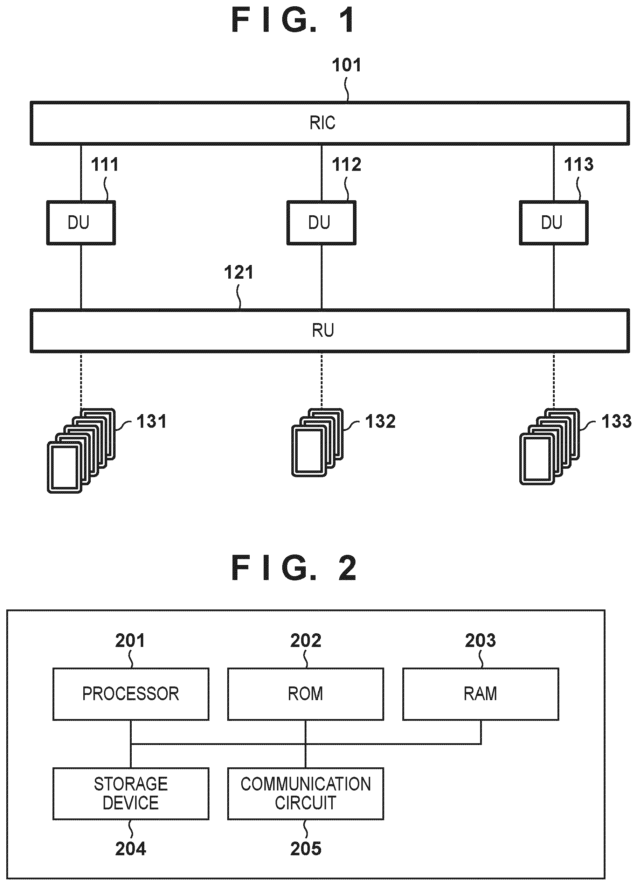

FIG. 1 shows an example configuration of a radio communication system according to the present embodiment. This radio communication system has a configuration that is based on an open radio access network (O-RAN), for example, and includes an RIC 101, DUs 111 to 113, and an RU 121. The RIC 101 is a RAN intelligent controller of the O-RAN, and includes an RT RIC that performs near real-time (Near-RT) control, and a non-real-time (Non-RT) RIC that executes long-term policy control and the like. Note that, here, the Near-RT RIC function is used to instruct radio resources (frequency and time resources) to be used to the DUs. The DUs 111 to 113 are distributed units of the O-RAN, and each have a scheduling function of assigning radio resources assigned thereto by the RIC 101 to terminal devices via the RU used by the DU. The RU 121 is a radio unit of the O-RAN that executes radio communication with the terminal devices (user equipment, UE) under the control of the DUs. Note that FIG. 1 shows an example in which the DUs 111 to 113 share one RU 121 and respectively communicate with the UE groups 131 to 133. Note that although the O-RAN configuration also includes a central unit (CU) and the like in addition to these functional units, FIG. 1 only shows the functional units related to the present embodiment for simplicity of description. Also, these configurations are examples, and the following discussion may, for example, be applied to networks conforming to different standards from O-RAN that use similar configurations. Also, naturally, the relationship between DUs and RUs that are used by the DUs, the numbers of DUs and RUs, and the like are not limited to the example in FIG. 1. That is, various changes and modifications can be made without departing from the gist of the following discussion.

In this radio communication system, for example, information of each UE is notified to the RIC 101 via the DU that communicates with that UE. The information of each UE can include, for example, information indicating the radio quality and the amount of traffic to be transmitted or received by the UE. Also, the information of each UE may include, for example, information of a network slice that the UE uses. The RIC 101 then specifies the amount of radio resources to be assigned to each UE and notifies the DU that communicates with the UE to use radio resources of an amount corresponding to the total amount of radio resources for UEs with which the DU communicates. Third Generation Partnership Project (3GPP (registered trademark)) specifications stipulate that the RIC notify information indicating the resource amount that should be assigned or is permitted to be assigned for each network slice to the DU. Conventionally, one RU is used by only one DU, and thus even if only such information of the resource amount is notified, the DU is able to appropriately perform communication, by assigning resources of the notified amount for each network slice such that the frequency and time domains do not overlap. However, in the present embodiment, one RU is shared by a plurality of DUs, and thus it can be perceived that when only the amount of resources to be used by each DU is designated to the DU, multiple DUs will try to use at least some of the frequency and time resources available through that RU. In such a case, at least one of the DUs will no longer be able to perform communication, and communication efficiency can significantly deteriorate.

In the present embodiment, in view of such circumstances, the RIC 101 notifies information indicating which frequency and time resources to use, rather than the amount of radio resources, to the DUs 111 to 113. The RIC 101 can, for example, designate the frequency resources to be assigned to each DU, using physical resource block (PRB) indices. For example, the location of the assigned frequency resources can be designated using a list of PRBs. The RIC 101 can notify the DU that PRBs whose indices are 0, 3, 5, 7, 8 are assigned, with information such as AllocRB = [0, 3, 5, 7, 8], for example. Also, the RIC 101 may, for example, notify the range of assigned frequencies in PRB units. For example, the RIC 101 can notify an index Nₛₜₐᵣₜ of the PRB indicating the lower end of the range of frequencies and an index N_{end} of the PRB indicating the upper end of the range of frequencies to the DU. The RIC 101 can notify the DU that PRBs whose indices are 3 to 6 are assigned, with information such as Nₛₜₐᵣₜ = 3, N_{end} = 6, for example. Also, the RIC 101 may notify the range of assigned PRBs to the DU, using information indicating the location of the PRB corresponding to the lower end or upper end of the range and a number N_{width} of PRBs indicating the size of the range. The RIC 101 can notify the DU that PRBs whose indices are 3 to 6 are assigned, with information such as Nₛₜₐᵣₜ = 3, N_{width} = 4, for example.

Also, the RIC 101 may notify information indicating the assigned frequency range to the DU, without using PRB units. The RIC 101 can, for example, notify a value fₛₜₐᵣₜ indicating the upper end of the frequency range and a value f_{end} indicating the lower end of the frequency range to the DU. In this case, the frequency range fₛₜₐᵣₜ to f_{end} is assigned to the DU. Also, the RIC 101 may, for example, notify a value indicating the upper end or the lower end of the frequency range and a value f_{width} indicating the width of the frequency range to the DU. In this case, the frequency range fₛₜₐᵣₜ to fₛₜₐᵣₜ+f_{width} or the frequency range f_{end}-f_{width} to f_{end} is assigned to the DU. Note that when indicating the assignment of radio resources by frequency range, a plurality of pieces of information may be prepared, in order to indicate a plurality of discontinuous frequency ranges.

These notifications can be performed at regular time intervals. In this case, assignment of frequency resources such as described above can be maintained for a time period corresponding to the regular time interval from the time of receipt of the notification or from a timing after a predetermined offset value from the receipt of the notification. For example, in the case where the time interval corresponds to a time period of five PRBs, the DU communicates with the UE in accordance with the assignment of frequency resources, for five PRBs from the next PRB after the timing at which the notification of assignment of frequency resources is received, and can use the assignment of frequency resources received within the period of five PRBs in the next period of five PRBs. Note that this time interval may also be represented in time units other than units of PRBs.

Also, in the above example, an example of the assignment of frequency resources is shown, but time resources can also be assigned in a similar manner. For example, information indicating the time resources assigned to each DU can be notified to the DU by the RIC 101 in units of subframes. The RIC 101 can, for example, notify information indicating which subframes are assigned to the DU in a format such as [hyper system frame number (H-SFN), system frame number (SFN), subframe number]. For example, the RIC 101 is able to notify that the first and third subframes of frames H-SFN = 10 and SFN = 845 are assigned to the DU, with information [10, 845, 1, 3]. Also, the RIC 101 may notify the assigned time resources with information indicating a continuous time range. For example, the RIC 101 can indicate the assigned time resources, with information Sₛₜₐᵣₜ indicating the location of the first subframe corresponding to the start timing of the time range and information S_{end} indicating the location of the last subframe corresponding to the end timing of the time range. In this case, the first to third subframes of the frames H-SFN = 10 and SFN = 845 being assigned to the DU can be notified with Sₛₜₐᵣₜ = [10, 845, 1] and S_{end} = [10, 845, 3]. Note that when the subframes clearly belong to the same frames H-SFN and SFN, such as when assignment is notified by the RIC 101 in frame units, H-SFN and SFN may be omitted from the last subframe, as in S_{end} = [3]. Note that a configuration may be adopted in which H-SFN and SFN are notified in the information indicating the last subframe, and H-SFN and SFN are omitted in the information indicating the first subframe. That is, it is sufficient to uniquely specify the locations of the subframes in at least one of the information indicating the first subframe and the information indicating the last subframe, and redundant information can be omitted. Also, the time range assigned to the DU may be notified, with information indicating the beginning or end of the time range such as described above and information S_{size} indicating the width of the time range. For example, the first to third subframes of the frames H-SFN = 10 and SFN = 845 being assigned to the DU can be notified with Sₛₜₐᵣₜ = [10, 845, 1] and S_{size} = 3.

Furthermore, the RIC 101 may notify information indicating the assigned time range to the DU, without using subframe units. The RIC 101 can, for example, notify a value tₛₜₐᵣₜ indicating the start timing of the time range and a value t_{end} indicating the end timing of the time range to the DU. In this case, the time range from tₛₜₐᵣₜ to t_{end} is assigned to the DU. Also, the RIC 101 may, for example, notify a value indicating the start timing or end timing of the time range and a value t_{size} indicating the width of the time range to the DU. In this case, the time range tₛₜₐᵣₜ to tₛₜₐᵣₜ+t_{size} or the time range t_{end}-t_{size} to t_{end} is assigned to the DU. Note that when the assignment of radio resources is indicated by time range, a plurality of pieces of information may be prepared, in order to indicate a plurality of discontinuous time ranges.

Also, a combination of the above-described information designating frequency resources and information designating time resources may be notified to the DU. For example, one PRB can be designated, using information such as [PRB (frequency direction) index, H-SFN, SFN, subframe number]. A plurality of PRBs assigned to a DU may be notified to the DU, using a plurality of pieces of such information. Also, information designating a range such as [Nₛₜₐᵣₜ, N_{end}, Sₛₜₐᵣₜ, S_{end}] [fₛₜₐᵣₜ, f_{end}, tₛₜₐᵣₜ, t_{end}], for example, may be used. Here, as described above, information indicating the width of a frequency range or the width of a time range may be used. Also, for example, a combination of information indicating a frequency range and information individually indicating subframe numbers may be used, or, similarly, a combination of information individually indicating PRB indices and information indicating a time range may be used.

Note that resource assignment information such as described above can include identification information capable of uniquely identifying the DUs, in order to indicate which DU the information relates to. That is, identification information can be associated with the resource assignment information and notified from the RIC 101 to the DUs. In the case where, however, it is clear which DU the radio resource assignment information is addressed to, such as when the resource assignment information is individually notified to the DUs, the assignment information need not include identification information of the DU.

Here, the DUs are able to use a plurality of RUs, for example. In this case, in the communication of UEs residing in an area where the cells formed by the plurality of RUs overlap, radio signals transmitted and received by one cell can interfere with radio signals transmitted and received by another cell. Thus, coordinated multi-point (CoMP) communication can be performed using the same resources in the plurality of RUs, such that interference does not occur in the communication of UEs residing in such an area. In the present embodiment, the RIC 101 notifies radio resources for CoMP to the DUs in such a manner as to be distinguished from non-CoMP radio resources. In one example, information that includes CoMP radio resources and non-CoMP radio resources in a distinguishable format can be notified from the RIC 101 to the DUs. Accordingly, resources commonly assigned in the plurality of RUs for CoMP communication can be prevented from being assigned for non-CoMP communication by the DUs, and a shortage of radio resources available for CoMP communication can thereby be prevented.

Radio resources for such CoMP communication can be individually secured for combinations of overlapping cells. For example, in the case of three cells, the CoMP radio resources are assigned separately to each of four areas; namely, (1) an area where the first and second cells overlap and do not overlap with the third cell, (2) an area where the first and third cells overlap and do not overlap with the second cell, (3) an area where the second and third cells overlap and do not overlap with the first cell, and (4) an area where the first to third cells all overlap. Information designating the radio resources assigned as described above is provided for each combination of cells. Note that, for each of cell combinations such as (1) to (4) described above, a list of cells is associated with identification information, and radio resource assignment information in which the identification information is associated with assigned radio resources can be notified from the RIC 101 to the DUs. For example, when the respective numbers of UEs residing in the above-described areas (1) to (4) is significantly different, the required amount of radio resources can vary greatly according to the number of UEs. In such a case, as a result of information in which cell combinations are associated with CoMP radio resources being notified from the RIC 101 to the DUs, as described above, the DUs can assign an appropriate amount of radio resources for communication of UEs in each area. Note that the RIC 101 can determine the assignment of radio resources for non-CoMP communication of UEs residing in an area where the cell does not overlap with other cells so as to not overlap with radio resources assigned for CoMP communication, and notify the determined assignment to the DUs.

Note that the DUs notify information indicating the status of each UE to the RIC 101, and the RIC 101 determines the assignment of radio resources for communication of UEs in each area. For example, with regard to the UE groups to which the DUs provide communication services, the DUs transmit, to the RIC 101, information such as the traffic amount and network slice of each UE, whether the UE group is targeted for CoMP communication, and, if targeted for CoMP communication, a list of cells that overlap with each other in the area in which the UE resides. The RIC 101 then determines the amount of radio resources to be assigned to each DU, based on the information received from the DU, and assigns radio resources to the DUs such there is no interference. Here, the RIC 101 determines, with regard to a UE group targeted for CoMP communication, for example, the radio resources assigned for each combination of cells and determines, for each of those combinations of cells, the location of available time or frequency resources serving as radio resources. The RIC 101 then notifies the DUs of the determined radio resources. The RIC 101 can also determine, with regard to a UE group that is not targeted for CoMP communication, the location of radio resources to be used for each cell, and notify the locations of the radio resources to the DU. It is thereby ensured that the DU uses radio resources that differ from the radio resources used by other DUs, and it becomes possible to efficiently provide communication services to the UEs.

### (Apparatus Configuration)

An example hardware configuration of a DU and an RIC will be described, with reference to FIG. 2. In one example, the DU and RIC include a processor 201, a ROM 202, a RAM 203, a storage device 204, and a communication circuit 205. The processor 201 is a computer that includes one or more processing circuits such as a general-purpose CPU (central processing unit) and an ASIC (application-specific integrated circuit), and executes overall processing of the apparatus and the various processing described above, by reading out and executing programs stored in the ROM 202 or the storage device 204. The ROM 202 is a read-only memory that stores information such as programs and various parameters relating to processing that is executed by the DU and the RIC. The RAM 203 is a random access memory that functions as a workspace when the processor 201 is executing programs and stores temporary information. The storage device 204 is constituted by a removable external storage device, for example. The communication circuit 205 is constituted by, for example, a circuit for communication such as signaling that conforms to O-RAN or 3GPP specifications.

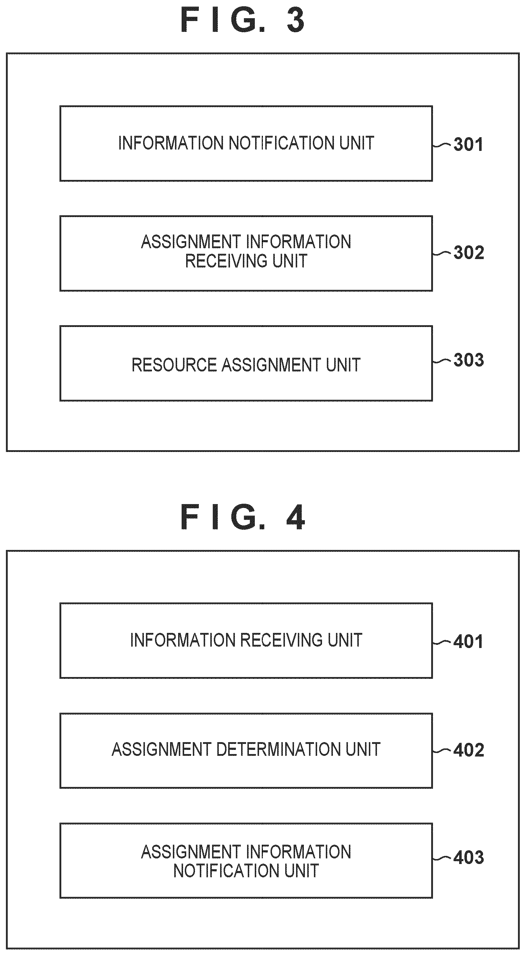

FIG. 3 is a diagram showing an example functional configuration of a DU. The DU includes an information notification unit 301, an assignment information receiving unit 302, and a resource assignment unit 303, for example. Note that, in FIG. 3, only functions particularly related to the present embodiment are shown, and various other functions that the DU can include are omitted. For example, the DU naturally has other functions that a DU of an O-RAN generally includes. Also, the functional blocks in FIG. 3 are schematically shown, and these functional blocks may be realized in an integrated manner, or may be further subdivided. Also, the functions in FIG. 3 may be realized by, for example, the processor 201 executing programs stored in the ROM 202 or the storage device 204, or may be realized by dedicated hardware. Note that the processing executed by each functional unit is not described in detail here, and only the general functions are outlined.

The information notification unit 301 notifies, to the RIC 101, information relating to the UEs residing in cells to which the DU provides communication services via the RUs, for example. The information notification unit 301 can collect information indicating the radio communication quality of each UE and information specifying the amount of traffic to be communicated by the UE and notify the collected information to the RIC 101. Also, the information notification unit 301 can notify information to the RIC 101 in a format capable of distinguishing a UE group targeted for CoMP from a UE group not targeted for CoMP. Note that, when a UE group targeted for CoMP resides in areas where cells of different combinations overlap, the information notification unit 301 can, for example, further notify information capable of specifying the combination of the cells to the RIC 101. For example, when the DU communicates using three or more cells, there are a plurality of areas in which the cells overlap, and thus the DU can notify information indicating which of the plurality of areas in which cells of different combinations overlap the UE resides in and information indicating the amount of traffic and the radio communication quality to the RIC 101. Also, the information notification unit 301 may, for example, notify the above-described information to the RIC 101 in a format capable of distinguishing the information of a UE that performs communication of a predetermined network slice from the information of other UEs. Similarly, the information notification unit 301 may, for example, notify the above-described information to the RIC 101, in a format capable of distinguishing the information of a UE that performs communication corresponding to a predetermined 5QI (5G QoS identifier) from the information of other UEs.

The assignment information receiving unit 302 receives information indicating the radio resources assigned to the DU by the RIC 101, based on the information notified by the information notification unit 301. This information can be information uniquely specifying the location of the frequency and/or time resources available to the DU via the RUs, as described above. Also, the information can, for example, be information designating the location of different frequency and/or time resources, with respect to radio resources to be assigned to the communication of UEs targeted for CoMP communication and radio resources to be assigned to the communication of UEs not targeted for CoMP communication. Also, the radio resources to be assigned to the communication of UEs targeted for CoMP communication can include the location of the frequency and/or time resources serving as radio resources for each combination of cells. Note that the radio resources referred to here are radio resources assigned to the DU, rather than information designating radio resources to be assigned to individual UEs.

The resource assignment unit 303 at least partially assigns the radio resources assigned to the DU for communication of UEs with which the DU communicates, based on the information received by the assignment information receiving unit 302. Also, when a first radio resource for communication of UEs targeted for CoMP communication and a second radio resource for communication of UEs not targeted for CoMP communication are notified in a distinguishable manner, the resource assignment unit 303 assigns the first radio resource to the UEs targeted for CoMP communication, and assigns the second radio resource to the UEs not targeted for CoMP communication. Also, when a radio resource is assigned to each combination of cells, for example, the resource assignment unit 303 assigns that radio resource for CoMP communication of UEs residing in an area where cells included in that combination overlap. Also, the resource assignment unit 303 assigns radio resources assigned to individual cells, based on information received by the assignment information receiving unit 302 for non-CoMP communication of UEs residing in an area in which none of the cells overlap.

FIG. 4 is a diagram showing an example functional configuration of an RIC. The RIC includes an information receiving unit 401, an assignment determination unit 402, and an assignment information notification unit 403, for example. Note that FIG. 4 shows only functions particularly related to the present embodiment, and various other functions that the RIC can include are omitted. For example, the RIC naturally has other functions that a RIC of an O-RAN generally includes. Also, the functional blocks in FIG. 4 are schematically shown, and these functional blocks may be realized in an integrated manner or may be further subdivided. Also, the functions in FIG. 4 may be realized by, for example, the processor 201 executing programs stored in the ROM 202 or the storage device 204, or may be realized by dedicated hardware. Note that the processing executed by each functional unit is not described in detail here, and only the general functions are outlined.

The information receiving unit 401 receives information of UEs that a DU communicates with from the DU. This information includes, for example, information such as the radio quality of the UEs and the amount of traffic to be transmitted or received by the UEs. This information may also include information indicating whether or not the UE is targeted for CoMP. Also, in the case of it being indicated whether the UE is targeted for CoMP, the information receiving unit 401 can further receive information indicating a combination of cells that perform CoMP communication. The assignment determination unit 402 determines the radio resources to be assigned to each DU, based on the received information. The assignment determination unit 402 can determine, based on information from a plurality of DUs, the frequency and/or time resources to be assigned to each DU, such that these resources do not overlap each other, for example. Also, when information relating to a UE targeted for CoMP is received, the assignment determination unit 402 can specify a combination of cells that perform CoMP communication, and can determine to assign the same frequency/time resources for CoMP communication to the cells included in the combination. Note that, when there is more than one combination of cells that perform CoMP communication, the assignment determination unit 402 can determine different frequency and/or time resources for the different combinations of cells. Note that the assignment determination unit 402 may, furthermore, classify the UEs by type based on other criteria such as network slices and 5QI, and assign radio resources that differ for each type. The assignment information notification unit 403 notifies the assignment of radio resources determined by the assignment determination unit 402 to the DUs.

### (Processing Flow)

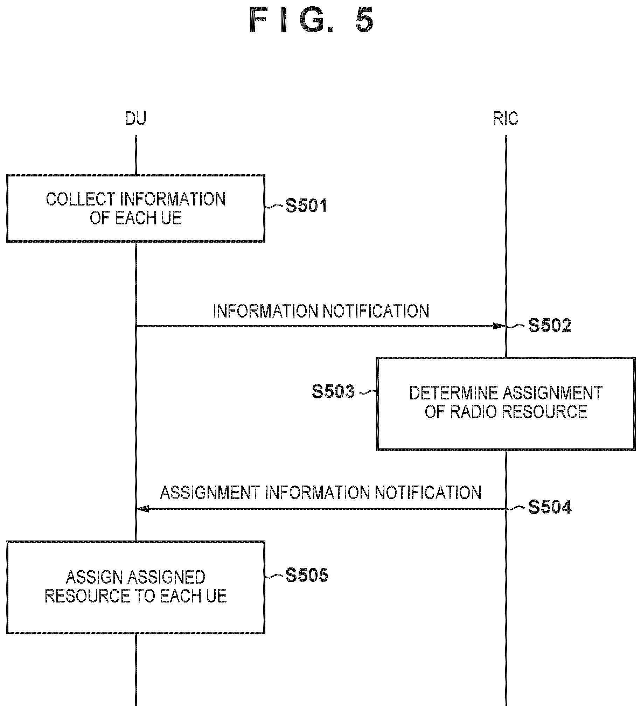

Next, an example of the flow of processing executed in the RIC and the DU according to the present embodiment will be outlined, using FIG. 5.

First, the DU collects information about UEs residing within the range of cells that the DU schedules (S501). The DU acquires information on the amount of traffic to be transmitted to or from a UE connected to the RU providing the cells that are scheduled, the radio quality of the UE, and the like, for example. The DU then notifies the information to the RIC (S502). The RIC receives the information from the DUs and, based on the notified information, determines the amount of radio resources assigned to each DU, and further determines the location of the frequency and/or time resources assigned to each DU, based on the amount of radio resources (S503). Here, the RIC determines radio resources corresponding to at least one RU such that the radio resources assigned to each of the DUs do not overlap each other. The RIC then notifies information indicating the assignment of determined radio resources to each DU (S504). Here, in the information notified to each DU, radio resources relating to at least one of frequency and time that are available for provision to terminal devices by the DU to which the information is addressed are designated. Note that the RIC can assign separate resources to a UE group targeted for CoMP and other UE groups, as described above. Also, when a UE group targeted for CoMP resides in areas where cells of different combinations overlap, separate resources can be assigned for each combination of cells. The DU is able to specify radio resources that are available when the DU provides communication services to terminal devices, based on the received assignment information. The DU then at least partially assigns the radio resources assigned to the DU to the UEs that the DU schedules (S505). Note that the DU assigns radio resources assigned to a UE group targeted for CoMP for communication of UEs residing in an area where cells overlap, and assigns radio resources assigned to a UE group not targeted for CoMP for communication of UEs residing in an area where cells do not overlap.

As described above, in the present embodiment, in an environment where a plurality of DUs share one RU, the radio resources to be used by each DU are clearly designated in a frequency and/or time domain by the RIC. Competition for radio resources that are used by the plurality of DUs can thereby be prevented, and it becomes possible to perform communication using radio resources efficiently in such an environment. Therefore, it becomes possible to contribute to Goal 9 of the United Nations" Sustainable Development Goals (SDGs), "Build resilient infrastructure, promote sustainable industrialization, and foster innovation".

The invention is not limited to the foregoing embodiments, and various variations/changes are possible within the spirit of the invention.

The present application claims the benefit of priority from Japanese Patent Application No. 2022-187554 filed on November 24, 2022, which is hereby incorporated by reference herein in its entirety.

## Claims

1. A processing apparatus functioning as a distributed unit (DU) in a radio communication system in which one radio unit (RU) is shared by a plurality of DUs, the processing apparatus comprising:
notification means for notifying, to a control device, first information relating to a radio quality and an amount of traffic to be transmitted or received by a terminal device to which the processing apparatus provides a communication service via the one RU;
receiving means for receiving, from the control device, second information indicating assignment, to the processing apparatus, of radio resources relating to at least one of frequency and time for the one RU; and
communication means for at least partially assigning the radio resources indicated by the second information to the terminal device and communicating with the terminal device via the one RU.

2. The processing apparatus according to claim 1,
wherein the second information indicates the assignment of the radio resources relating to frequency to the processing apparatus, by designating respective locations of physical resource blocks (PRBs) useable by the processing apparatus, or by designating a location of the PRB corresponding to an upper end and a lower end of a range of frequencies useable by the processing apparatus, or by designating a location of the PRB corresponding to the upper end or the lower end of the range of frequencies and the number of PRBs corresponding to a width of the range of frequencies.

3. The processing apparatus according to claim 1,
wherein the second information indicates the assignment of the radio resources relating to frequency to the processing apparatus, by designating an upper end and a lower end of a range of frequencies useable by the processing apparatus, or by designating the upper end or the lower end of the range of frequencies and a width of the range of frequencies.

4. The processing apparatus according to claim 1,
wherein the second information indicates the assignment of the radio resources relating to time to the processing apparatus, by designating respective locations of subframes useable by the processing apparatus, or by designating the location of the subframe corresponding to a start timing and an end timing of a range of times useable by the processing apparatus, or by designating the location of the subframe corresponding to the start timing or the end timing of the range of times and the number of subframes corresponding to a width of the range of times.

5. The processing apparatus according to claim 1,
wherein the second information indicates the assignment of the radio resources to the processing apparatus, by designating a start timing and an end timing of a range of times useable by the processing apparatus, or by designating the start timing or the end timing of the range of frequencies and a width of the range of times.

6. The processing apparatus according to claim 1,
wherein, in a case where the processing apparatus uses another RU in addition to the one RU, the second information indicates the assignment of radio resources for each of the one RU and the other RU,
the assignment of the radio resources includes a first radio resource and a second radio resource in a distinguishable format, the first radio resource being assignable by the processing apparatus to a terminal device residing in an area where cells respectively formed by the one RU and the other RU overlap each other, and the second radio resource being assignable by the processing apparatus to a terminal device residing in an area where the cells do not overlap, and
the first radio resource for the one RU and the first radio resource for the other RU are common to each other.

7. A control device that assigns radio resources to a plurality of processing units each functioning as a distributed unit (DU) in a radio communication system in which one radio unit (RU) is shared by the processing units, the control device comprising:
receiving means for receiving, from each of the processing apparatuses, a radio quality and an amount of traffic to be transmitted or received by a terminal device to which the processing apparatus provides a communication service via the one RU;
determination means for individually determining, for each of the processing apparatuses, radio resources relating to at least one of frequency and time for the one RU; and
notification means for notifying second information indicating the determined radio resources to each of the processing apparatuses.

8. The control device according to claim 7,
wherein the second information indicates the assignment of the radio resources relating to frequency to the processing apparatus to which the second information is addressed, by designating respective locations of physical resource blocks (PRBs) useable by the processing apparatus, or by designating a location of the PRB corresponding to an upper end and a lower end of a range of frequencies useable by the processing apparatus, or by designating a location of the PRB corresponding to the upper end or the lower end of the range of frequencies and the number of PRBs corresponding to a width of the range of frequencies.

9. The control device according to claim 7,
wherein the second information indicates the assignment of the radio resources relating to frequency to the processing apparatus, by designating an upper end and a lower end of a range of frequencies useable by the processing apparatus, or by designating the upper end or the lower end of the range of frequencies and a width of the range of frequencies.

10. The control device according to claim 7,
wherein the second information indicates the assignment of the radio resources relating to time to the processing apparatus, by designating respective locations of subframes useable by the processing apparatus, or by designating the location of the subframe corresponding to a start timing and an end timing of a range of times useable by the processing apparatus, or by designating the location of the subframe corresponding to the start timing or the end timing of the range of times and the number of subframes corresponding to a width of the range of times.

11. The control device according to claim 7,
wherein the second information indicates the assignment of the radio resources to the processing apparatus, by designating a start timing and an end timing of a range of times useable by the processing apparatus, or by designating the start timing or the end timing of the range of frequencies and a width of the range of times.

12. The control device according to claim 7,
wherein, in a case where the processing apparatus uses another RU in addition to the one RU, the second information indicates the assignment of radio resources for each of the one RU and the other RU,
the assignment of the radio resources includes a first radio resource and a second radio resource in a distinguishable format, the first radio resource being assignable by the processing apparatus to a terminal device residing in an area where cells respectively formed by the one RU and the other RU overlap each other, and the second radio resource being assignable by the processing apparatus to a terminal device residing in an area where the cells do not overlap, and
the first radio resource for the one RU and the first radio resource for the other RU are common to each other.

13. A control method for execution by a processing apparatus functioning as a distributed unit (DU) in a radio communication system in which one radio unit (RU) is shared by a plurality of DUs, the control method comprising:
notifying, to a control device, first information relating to a radio quality and an amount of traffic to be transmitted or received by a terminal device to which the processing apparatus provides a communication service via the one RU;
receiving, from the control device, second information indicating assignment, to the processing apparatus, of radio resources relating to at least one of frequency and time for the one RU; and
at least partially assigning the radio resources indicated by the second information to the terminal device and communicating with the terminal device via the one RU.

14. A control method for execution by a control device that assigns radio resources to a plurality of processing units each functioning as a distributed unit (DU) in a radio communication system in which one radio unit (RU) is shared by the processing units, the control method comprising:
receiving, from each of the processing apparatuses, a radio quality and an amount of traffic to be transmitted or received by a terminal device to which the processing apparatus provides a communication service via the one RU;
individually determining, for each of the processing apparatuses, radio resources relating to at least one of frequency and time for the one RU; and
notifying second information indicating the determined radio resources to each of the processing apparatuses.

15. A program for causing a computer provided in a processing apparatus functioning as a distributed unit (DU) in a radio communication system in which one radio unit (RU) is shared by a plurality of DUs to:
notify, to a control device, first information relating to a radio quality and an amount of traffic to be transmitted or received by a terminal device to which the processing apparatus provides a communication service via the one RU;
receive, from the control device, second information indicating assignment, to the processing apparatus, of radio resources relating to at least one of frequency and time for the one RU; and
at least partially assign the radio resources indicated by the second information to the terminal device and communicate with the terminal device via the one RU.

16. A program for causing a computer provided in a control device that assigns radio resources to a plurality of processing units each functioning as a distributed unit (DU) in a radio communication system in which one radio unit (RU) is shared by the processing units to:
receive, from each of the processing apparatuses, a radio quality and an amount of traffic to be transmitted or received by a terminal device to which the processing apparatus provides a communication service via the one RU;
individually determine, for each of the processing apparatuses, radio resources relating to at least one of frequency and time for the one RU; and
notify second information indicating the determined radio resources to each of the processing apparatuses.
